# FASCICULE DE BREVET EUROPEEN

(11) **EP 2 783 985 B1**
(45) Date de publication et mention de la délivrance du brevet: **04.10.2017**
(21) Numéro de dépôt: 14161493.3
(22) Date de dépôt: 25.03.2014
(51) Int. Cl.: B64D 11/06

(54) **Agencement de sièges convertibles en couchettes**
Anornung von konvertiblen Sitzen.
convetible seats Arrangement

(30) Priorité: 25.03.2013 FR 1352623
(43) Date de publication de la demande: 01.10.2014
(73) Titulaire: Stelia Aerospace, 17300 Rochefort (FR)
(72) Inventeur: Jerome, Olivier, 17640 VAUX SUR MER (FR); Texeraud, Laurent, 17220 CLAVETTE (FR); Martin, Gabriel, 17620 ECHILLAIS (FR)
(74) Mandataire: Ipside

(56) Documents cités:
- WO-A2-2009/120308
- US-A- 2 124 003
- US-A1- 2007 152 100
- US-A1- 2012 298 798

## Description

La présente invention appartient au domaine des aménagements des cabines de moyens de transport de passagers.

Plus particulièrement l'invention concerne un agencement de sièges convertibles en couchettes particulièrement adapté aux besoins de cabines pour passagers, par exemple de cabines d'aéronefs.

Dans le domaine du transport, comme par exemple dans le transport aérien, il est connu d'agencer les sièges par rangs successifs placés les uns à côté des autres, auxquels il est accédé par des allées dans le sens transversale des rangs.

Pour des raisons économiques il est recherché de placer le maximum de passagers dans un espace donné et dans ce cas il est agit, outre sur la largeurs des sièges, sur la distance entre deux rangs de siège en réduisant autant que possible cette distance.

La conséquence en est une réduction du confort qui rend pénibles les longs voyages et qui est en outre inacceptable pour certaines catégories de passagers.

Lorsque la durée des voyages le justifie, par exemple dans les vols long courrier des aéronefs, il est connu de proposer aux passagers des sièges pouvant être convertis entre des positions assise, détente ou couchage pendant la durée du voyage.

Pour cela, il est connu de réaliser des fauteuils pour lesquels un mouvement conjugué de l'assise, du dossier et d'un repose jambes positionnant ces différentes parties du fauteuil sensiblement à l'horizontale dans un même plan permet de former un couchage, le cas échéant prolongé par une banquette fixe à la même hauteur que le plan de couchage.

De tels sièges ont cependant des exigences de place supérieures aux sièges non convertibles pour permettre à un passager d'être étendu malgré la présence des autres sièges qui peuvent également prendre la position couchage.

Afin de limiter la pénalité de tels sièges convertibles sur la distance séparant deux rangs de sièges, il est connu du brevet EP 2507131 d'agencer les sièges 301, 302 par paires 300 avec des axes convergeant de sorte que les pieds de passagers en position couchage se trouvent entre les dossiers des sièges situés en avant d'une paire de siège considéré et, afin de limiter l'écartement nécessaire entre les dossiers, de réaliser des plans de couchage de deux sièges voisins sur un rang à des hauteurs différentes de sorte que les pieds des deux passagers de ces couchages se trouvent dans des logements superposés.

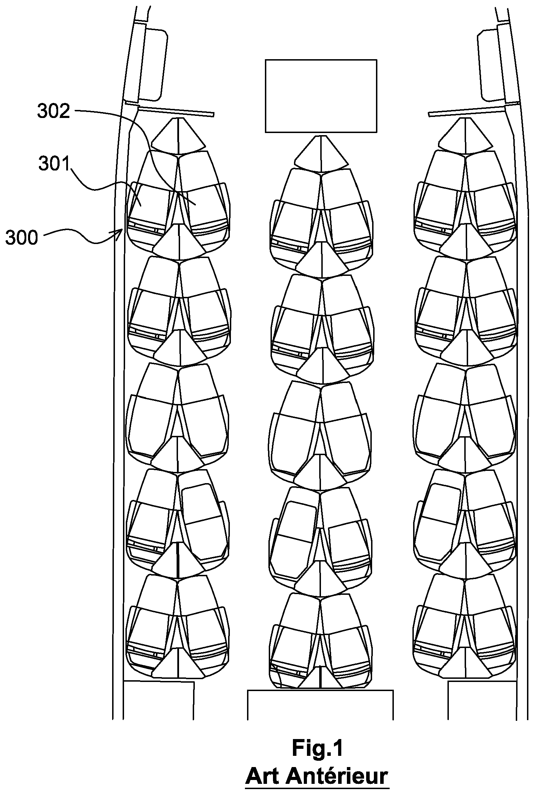

Un exemple d'agencement d'une cabine d'avion résultant de cette solution est présenté sur la figure 1.

Ce type d'agencement qui constitue un progrès sensible de réduction du pas des rangs de siège dans le domaine des sièges de confort, présente cependant des limitations, en particulier dans l'agencement des espaces personnels des passagers, qui peuvent amoindrir l'intérêt de certains passagers pour cette solution.

Il est également connu d'agencer dans une cabine des sièges tournés dans des sens opposés de sorte que des passagers se trouvent face à face. La demande de brevet US 2012/0298798 présente différents agencements face à face de sièges dans une cabine d'avion. Dans certains de ces agencement les axes des sièges d'une colonne de sièges sont orientés différemment de l'axe de la colonne dans lequel deux sièges sont face à face sans toutefois que le volume mis à la disposition des pieds d'un passager ne vienne interférer avec les volumes d'une colonne immédiatement juxtaposée.

Bien que permettant de réduire la distance entre deux rangées de siège, cette solution ne permet pas de bénéficier de tous les avantages de gains d'espace occupé lorsqu'il est considéré des aménagements de cabine avec des colonnes de sièges juxtaposées. L'objet de l'invention est un ensemble de deux blocs de sièges selon la revendication 1. La présente invention propose une alternative à ce type d'aménagement connu en améliorant la qualité des agencements proposés aux passagers tout en diminuant le pas moyen des rangs de sièges sans affecter le confort des occupants.

Les sièges sont agencés par groupe de quatre sièges dans un ensemble de deux blocs de deux sièges, un premier siège et un second siège pour chaque bloc, dans lequel chaque siège est convertible individuellement, par un mouvement relatif d'au moins une assise et un dossier du siège, entre une configuration fauteuil et une configuration couchage. Dans la position couchage, l'assise et le dossier d'un siège sont placés sensiblement dans un plan horizontal pour former une partie du plan de couchage. Les deux blocs de l'ensemble sont agencés avec les sièges d'un bloc avant globalement en position face à face avec les sièges d'un bloc arrière dans un rectangle au sol exinscrit de l'ensemble, rectangle qui est délimité par des bords latéraux, chacun de longueur **Lx,** orientés suivant une direction longitudinale X de l'ensemble, par un bord avant et par un bord arrière, chacun de longueur **Ly,** orientés suivant une direction transversale de l'ensemble perpendiculaire à la direction longitudinale X.

En outre dans l'ensemble de deux blocs:
- les premiers sièges des deux blocs sont agencés dans l'ensemble de deux blocs suivant une première diagonale du rectangle exinscrit ;
- des axes longitudinaux des premiers sièges sont rapprochés, en direction, d'une direction de la première diagonale ;
- les premiers sièges sont placés sensiblement en vis à vis, c'est-à-dire qu'un occupant assis sur un des premiers sièges se trouve en face d'un occupant assis sur l'autre premier siège.

Il est ainsi obtenu un arrangement de l'ensemble de deux blocs dans lequel les deux premiers sièges sont en mesure de partager un volume allongé entre deux premiers sièges suivant une diagonale du rectangle exinscrit à l'ensemble de deux blocs. La distance entre les deux premiers sièges est telle qu'une zone pieds d'un premier siège d'un bloc, sur laquelle zone pieds se trouvent les pieds d'un occupant du premier siège considéré en position couchage, se superpose en vue de dessus avec une zone pieds du premier siège de l'autre bloc, et lorsque les deux premiers sièges sont en configuration couchage, le plan de couchage des deux premiers sièges sont situés à des hauteurs différentes par rapport à un niveau de référence.

Ainsi les volumes affectés à un bloc se superposent aux volumes affectés à l'autre bloc dans la zone des pieds pour les premiers sièges des deux blocs. Cette configuration permet un recouvrement relativement important, et sans pénalité sensible, des espaces affectés dans des conditions moins contraignantes que lorsque le recouvrement est réalisé entre une zone pieds d'un siège et une zone de la tête d'un autre siège comme il est connus des solutions antérieures.

Dans un mode de réalisation la longueur **Ly** des bords avant et arrière, correspondant à la largeur du rectangle exinscrit, est déterminée par l'assemblage côte à côte des deux sièges d'un bloc, largeurs cumulées des assises et des accoudoirs des deux sièges, et les seconds sièges sont agencés dans l'ensemble suivant la seconde diagonale du rectangle inscrit et avec un axe longitudinal de chacun de ces seconds sièges orienté de sorte qu'une zone pieds de chacun des seconds sièges sont situés à l'intérieur du rectangle exinscrit.

Il est ainsi obtenu par des orientations des sièges de chaque bloc une largeur limitée de l'ensemble de deux blocs.

Dans une forme de réalisation, les zones pieds correspondent à des logements de pieds, dans lesquelles les occupants des sièges sont en mesure de placer leurs pieds lorsque les sièges sont en position couchage, agencés dans une console centrale entre les deux blocs, les logements de pieds des premiers sièges étant superposés et les logements de pieds des seconds sièges sont juxtaposés de part et d'autre des logements de pieds des premiers sièges.

Dans cette configuration, et sans qu'il soit nécessaire d'augmenter la largeur du rectangle exinscrit, il est réalisé des logements de pieds confortables dont la largeur est voisine de celle des assises des sièges.

Pour des raisons techniques et esthétiques, chaque siège est habillé d'une coque, coque qui enveloppe l'arrière du siège et au moins partiellement latéralement le siège.

Dans une forme de réalisation, la face arrière de la coque du second siège du bloc avant est sensiblement contre le bord avant du rectangle exinscrit, la face arrière de la coque du second siège du bloc arrière est sensiblement contre le bord arrière du rectangle exinscrit, est une face arrière de la coque de chacun des premiers sièges est décalée d'une distance **DLx** vers l'intérieur du rectangle exinscrit par rapport aux bords avant ou arrière du rectangle exinscrit.

Il est ainsi mis à profit la longueur disponible suivant la diagonale du rectangle exinscrit pour agencer les premiers sièges à une distance réduite suivant la direction longitudinale X et de pouvoir optimiser l'assemblage de plusieurs ensembles de blocs juxtaposés.

Dans un mode de réalisation, la console centrale forme une séparation visuelle entre les deux blocs intégrant des éléments individuels de confort ou d'amusement à l'attention de chacun des occupants des sièges.

Dans un mode particulier de réalisation, le plan de couchage de l'un au moins des seconds sièges est décalé en hauteur par rapport au plan de couchage du second siège qui lui est voisin dans le bloc comprenant le premier siège considéré.

La valeur du décalage en hauteur n'est, dans ce cas, pas contraint par la nécessité de superposé des logements de pieds et permet de rapprocher ou d'éloigner, suivant le résultat recherché, les deux plans de couchage des deux sièges d'un même bloc, procure un degré de liberté supplémentaire dans les aménagements de la colonne centrale.

Dans un mode particulier de réalisation, le plan de couchage de chacun des deux seconds sièges est décalé en hauteur par rapport au plan de couchage du premier siège qui lui est voisin dans le même bloc, de sorte que deux sièges situés du côté d'un même bord latéral du rectangle exinscrit se trouvent en position couchage décalés en hauteur dans un même sens, vers le haut ou vers le bas, par rapport aux deux sièges situés du côté de l'autre bord latéral dudit rectangle exinscrit.

Il est ainsi obtenu deux couchages bas d'un côté latéral de l'ensemble et deux couchages haut de l'autre côté latéral, configuration qui permet un accès facilité aux différents sièges en position de couchage lorsque l'accès est réalisé à partir du côté latéral où se trouvent les couchages bas.

L'invention s'adresse également à une cabine ou une partie de cabine de véhicule pour le transport de passagers comportant au moins une ligne d'au moins deux ensembles, conformes à l'invention, juxtaposés suivant l'axe longitudinal X, dans laquelle ligne une face arrière d'un bloc arrière d'un premier ensemble est contre une face arrière d'un bloc avant d'un second ensemble juxtaposé audit premier ensemble à l'arrière dudit premier ensemble.

Avantageusement, lorsque les premiers sièges d'un ensemble sont décalés vers l'intérieur du rectangle exinscrit, les rectangles exinscrits des au moins deux ensembles juxtaposés se recouvrent partiellement de la longueur **DLx** de sorte que **N** (N supérieur ou égale à deux) ensembles de longueur **Lx** juxtaposés occupent suivant la direction longitudinale X une longueur totale de **N** fois **Lx** diminuée de **N-1** fois **DLx.**

Il est ainsi obtenu un gain sur la longueur de cabine nécessaire pour agencer les ensembles de deux blocs et il en résulte un pas moyen des rangs de sièges réduit.

Lorsque la cabine comporte une ou des allées de circulation, avantageusement les deux sièges situés du côté d'un même bord latéral du rectangle exinscrit, et dont les plans de couchages sont décalés vers le bas par rapport aux deux sièges situés du côté de l'autre bord latéral du rectangle exinscrit, sont bordés par une allée de circulation de la cabine ou partie de cabine.

Dans une forme de réalisation, chaque ensemble comporte un bloc avant de deux sièges, un bloc arrière de deux sièges et une console centrale formant des éléments séparés qui sont fixés à des distances de séparation voulues indépendamment les uns des autres au plancher de la cabine ou partie de cabine par des points de fixation agencé dans le plancher, par exemple sur des rails de fixations incorporés au plancher.

Il est ainsi possible d'installer unitairement les différents éléments séparés lors de l'installation d'un aménagement de la cabine et accessoirement d'ajuster les distances de séparation entre les différents éléments pour des conditions particulières de mise en oeuvre, en particulier pour adapter un ensemble à différentes longueurs de couchage.

Dans une forme de réalisation de la cabine, un bloc arrière d'un premier ensemble de blocs placé dos à dos contre un bloc avant d'un second ensemble de blocs, juxtaposé au premier ensemble de bloc à l'arrière du premier ensemble de bloc, partage des servitudes utiles au fonctionnement des sièges des blocs considérés.

Il est ainsi obtenu une préparation plus simple de la cabine, par exemple en terme d'interfaces de connexions et de servitudes communes.

La cabine ou la partie de cabine est par exemple une cabine ou une partie de cabine d'un aéronef pour laquelle l'invention permet de réaliser, avec une densité améliorée, des couchages dont le confort est adapté aux voyage long courrier à bord des aéronefs.

La cabine ou la partie de cabine peut également être une cabine d'un véhicule de transport terrestre ou un véhicule de transport maritime, en particulier lorsque la durée des voyages ne justifie pas, en regard du service offert, des cabines passagers séparées.

La description d'un mode de réalisation non limitatif de l'invention est faite en référence aux figures qui représentent de manière schématique :
- Figure 1 :: un exemple de plan d'aménagement d'une cabine d'avion comportant des sièges convertibles en couchette suivant une solution connues ;
- Figure 2 :: en vue de dessus, un ensemble de deux blocs de deux sièges suivant l'invention, placés face à face et séparés par une console centrale et présenté en position fauteuil ;
- figures 3a et 3b :: en vue perspective, respectivement depuis l'avant et depuis l'arrière, de l'ensemble de deux blocs de deux sièges de la figure 2 ;
- figure 4 :: une vue de dessus simplifiée illustrant les quatre sièges d'un ensemble de deux blocs de deux sièges similaire à l'ensemble illustré sur les figures 2 à 3 et sur laquelle vue sont matérialisés les espaces occupés par les pieds des passagers en position couchage ;
- figure 5 :: en vue perspective un agencement de deux blocs de deux sièges dos à dos représentant des blocs de deux sièges d'ensembles conformes aux ensembles présentés dans les figures 1 à 5 juxtaposés longitudinalement ;
- figure 6 :: un exemple d'aménagement d'une partie de cabine d'avion avec des ensembles de deux blocs de deux sièges suivant l'invention.

La présente invention concerne un agencement de sièges convertibles au moins entre une position fauteuil, dans laquelle un occupant du siège est assis, et une position couchage à plat, dans laquelle un occupant du siège est étendu sensiblement à plat et sensiblement horizontalement.

Plus particulièrement l'invention concerne un ensemble dans lequel quatre sièges sont agencés en deux blocs de deux sièges.

Pour les besoins de la description, il sera considéré un sens avant, matérialisé par une flèche orientée suivant un axe longitudinal X de l'ensemble sur les dessins. Le choix d'un sens positif vers l'avant de l'axe longitudinal X est ici arbitraire et ne sera donc pas considéré comme une restriction de l'invention.

Toutefois, sauf évidence contraire, l'avant et l'arrière d'un siège devront être interprétés par rapport au sens dans lequel est assis un occupant du siège.

Il doit être noté que le plus souvent, dans les moyens de transport, un axe des sièges est orienté en fonction d'un axe du déplacement, le siège étant orienté soit face à l'avant, soit face à l'arrière, avant et arrière étant ici naturellement définis par rapport au sens du déplacement correspondant au sens positif de l'axe longitudinal X. Cette configuration en orientation n'est cependant pas systématique et un siège peut avoir d'autres orientations par rapport au sens du déplacement.

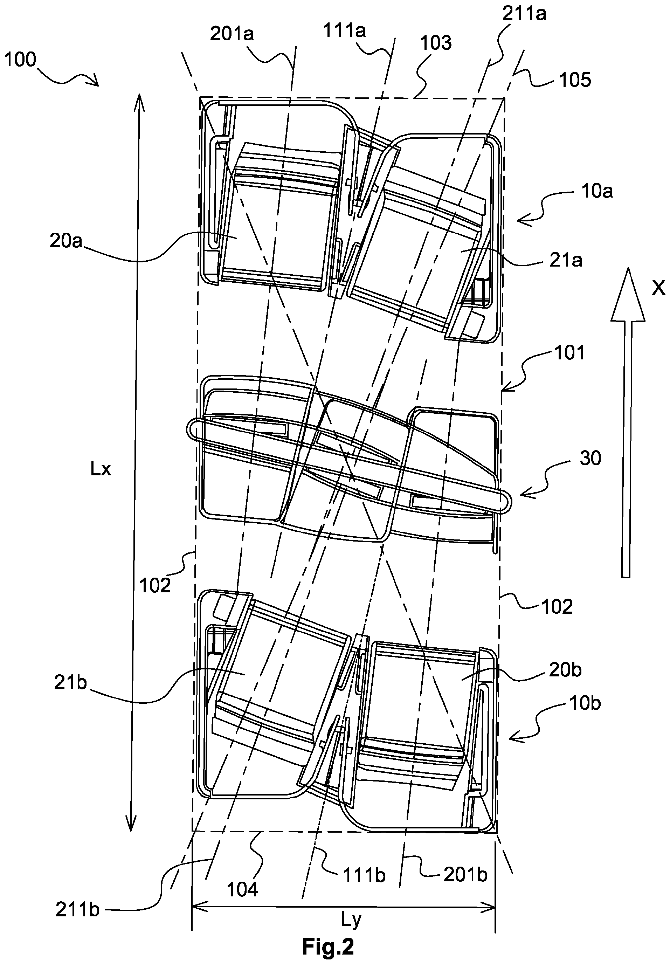

La figure 2 présente, en vue de dessus, un ensemble 100 de quatre sièges agencés suivant un bloc avant 10a, comportant un premier siège avant 21a et un second siège avant 20a, agencés côte à côte, et en un bloc arrière 10b, comportant un premier siège arrière 21b et un second siège arrière 20b agencés côte à côte.

Les quatre sièges sont dans ce cas de dimensions et de formes très voisines, sinon identiques, les dits quatre sièges appartenant à un ensemble offrant un confort homogène.

En vue de dessus sur la figure 2, l'ensemble 100 est agencé dans un rectangle exinscrit 101. Le rectangle exinscrit comporte des bords latéraux 102 parallèles à la direction longitudinale X de longueur L**x**, correspondant à une longueur du bloc, et des bords avant 103 et arrière 104 parallèles à une direction transversale, perpendiculaire à l'axe longitudinal X, de longueur **Ly**, correspondant à une largeur du bloc.

Le bloc avant 10a est placé avec les premier et second sièges avant orientés dos à l'avant contre ou proche d'un bord avant du rectangle exinscrit, et le bloc arrière 10b est placé avec les premier et second sièges arrières orientés face à l'avant contre ou proche d'un bord arrière dudit rectangle exinscrit.

Les sièges du bloc avant 10a sont donc agencés globalement dans l'ensemble 100 face à face avec les sièges du bloc arrière 10b.

Une console centrale 30, partie de l'ensemble 100, réalisant un cloisonnement de l'espace est agencée entre les deux blocs avant et arrière de sorte que des occupants des sièges se faisant face sont isolés de leurs voisins en vis à vis.

La console centrale 100, orientée dans la vue de dessus de la figure 2 avec sa plus grande dimension sensiblement suivant la direction transversale, présente une longueur suivant la dite direction transversale sensiblement égale à la largeur **Ly** du rectangle exinscrit.

La console centrale 100 est également située suivant la direction longitudinale sensiblement au milieu du rectangle exinscrit de sorte à définir des espaces sensiblement de mêmes dimensions attribués à chacun des blocs avant et arrière.

Chaque siège est orienté suivant une direction définie par un axe longitudinal 201a, 211a, 201b, 211b du siège considéré, respectivement 20a, 21a, 20b, 21b, et chaque bloc est orienté par un axe longitudinal 111a, 111b du bloc considéré, respectivement 10a, 10b.

L'axe longitudinal d'un bloc est en pratique orienté suivant une direction moyenne définie par les directions longitudinales des deux sièges du bloc considéré. Sur la figure 2, chaque axe longitudinal d'un siège ou d'un bloc matérialise la trace d'un plan de symétrie vertical d'ensemble dudit siège ou dudit bloc considéré.

Considérant le bloc avant 10a, l'axe longitudinal 211a du premier siège avant 21a converge avec l'axe longitudinal 201a du second siège avant 20a vers un point situé sensiblement sur l'axe longitudinal 111a dudit bloc avant et en avant des sièges avant.

Suivant un agencement similaire, l'axe longitudinal 211b du premier siège arrière 21b converge avec l'axe longitudinal 201b du second siège arrière 20b en direction d'un point situé sensiblement sur l'axe longitudinal 111b du bloc arrière 10b et en avant des sièges arrières.

L'axe longitudinal de chaque siège forme ainsi avec l'axe longitudinal du bloc auquel il appartient un angle siège/bloc Asb(i), où i est un indice du siège considéré.

En outre, l'axe longitudinal 111a, 111b de chacun des blocs, respectivement 10a, 10b, n'est pas parallèle aux bords latéraux 102 du rectangle exinscrit 101 et forme un angle bloc Ab(j) avec la direction des dits bords latéraux, ou j est un indice du bloc considéré.

Ainsi un angle siège As(i), déterminé par la direction longitudinal du siège considéré et la direction des bords latéraux, est le résultat de la combinaison de l'angle siège/bloc Asb(i) du siège considéré avec l'angle bloc Ab(j) du bloc auquel appartient ledit siège considéré et, dans un système d'axe orienté en considérant des valeurs algébriques des angles, As(i) = Asb(i) + Ab(j).

En outre, chaque angle bloc Ab(j) est tel que l'axe longitudinal du bloc de sièges considéré est pivoté par rapport à aux bords latéraux 102 du rectangle exinscrit en direction d'une première diagonale 105 dudit rectangle exinscrit.

Dans l'exemple illustré sur la figure 2, ladite première diagonale correspond à la diagonale reliant des sommets du rectangle exinscrit correspondant à des angles dudit rectangle exinscrit dans lesquels se trouvent les premiers sièges avant 21a et arrière 21b.

En outre, les positions relatives des sièges dans l'ensemble 100 et les signes des angles siège As(i) des sièges sont tels que les axes longitudinaux 211a, 211b des premiers sièges avant 21a et arrière 21b passent à proximité d'un centre du rectangle exinscrit, c'est-à-dire que les dits axes longitudinaux des sièges sont, dans la zone de la console centrale 30, à une distance sensiblement inférieure à une largeur des assises des sièges.

Suivant cette configuration, lorsque les angles sièges As(i) des deux premiers sièges avant 21a et arrière 21b sont de même valeur absolue, comme dans les exemples de réalisation illustrés sur les figures, il en résulte que les dits deux premiers sièges ont leurs axes longitudinaux 211a, 211b parallèles et rapprochés, pour le moins distants d'une valeur sur la vue de dessus de la figure 2 sensiblement inférieure à la largeur d'un siège.

Les premiers sièges avant 21a et arrière 21b sont en conséquences sensiblement alignés en configuration face à face, et les seconds sièges avant 20a et arrière 20b de l'ensemble 100 sont en conséquences situés de part et d'autre de cet alignement des deux premiers sièges.

Il peut être remarqué dans la configuration illustrée sur la figure 2 que des directions des axes longitudinaux 201a, 201b des seconds sièges avant 20a et arrière 20b, par la combinaison des angles siège/bloc Asb(i) avec les angles bloc Ab(j), se trouvent rapprochés de la direction des bords latéraux 102 du rectangle exinscrit.

De manière connue, chaque sièges 20a, 21a, 20b, 21b est convertible entre au moins deux positions extrêmes : une position fauteuil, dans laquelle un dossier du siège est relevé et sensiblement vertical, et une position couchage dans laquelle le dossier du siège est en position abaissée, sensiblement horizontal et sensiblement au niveau d'une assise dudit siège.

En outre un plan de couchage d'un siège en position couchage, définit par l'assise et le dossier dudit siège, est situé à une hauteur qui peut être différente, suivant le siège considéré parmi les quatre sièges de l'ensemble 100 auquel il appartient, en fonction de la position dudit siège considéré dans un bloc et de la position du bloc dans l'ensemble 100.

La hauteur d'une assise ou d'un plan de couchage doit être considéré par rapport à un plan horizontal de référence d'un véhicule dans lequel est installé le siège, le bloc ou l'ensemble considéré. Le choix d'un plan horizontal de référence est arbitraire et pour des raisons de commodité il sera considéré ici que ledit plan horizontal de référence correspond à un plan définit par un plancher du véhicule, par exemple le plancher sur lequel circulent des personnes devant accéder aux ensembles 100.

Chaque siège comporte une coque enveloppante 203a, 213a, 203b, 213b qui masque des éléments mécaniques du siège assurant les mouvements de conversion entre les différentes positions que peut prendre le siège et qui, outre des aspects esthétiques, isole les dits éléments mécanique pour éviter que des objets ou des personnes interfèrent avec les dits éléments.

Ladite coque est en outre suffisamment haute et enveloppante pour créer une intimité relative pour une personne étendue lorsque le siège est en position couchage, en isolant ladite personne, au moins au niveau de la tête, d'autres personnes pouvant se trouver à l'arrière ou sur un côté du siège.

Chaque siège comporte des accoudoirs et les accoudoirs entre les premier et second sièges d'un bloc sont avantageusement joints pour former une séparation des deux sièges du bloc, la forme de ladite séparation étant adaptée, triangulaire ou trapézoïdale en vue de dessus, pour prendre en compte le fait que les axes du premier siège et du second siège ne sont pas parallèles.

Le brevet EP 2507131, déjà cité, décrit des exemples de sièges convertibles et de blocs de deux sièges comportant des caractéristiques similaires aux sièges et blocs de la présente invention.

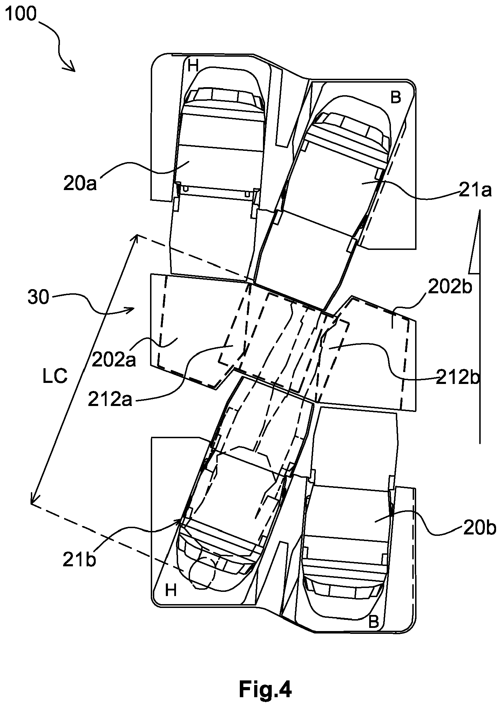

En considérant la figure 4 d'un ensemble 100 similaire à l'ensemble de la figure 2, sur laquelle les sièges 20a, 21a, 20b, 21b sont présentés en position couchage en vue de dessus et sur laquelle la console centrale 30 est seulement suggérée, un espace dédié à chaque siège s'étend vers l'avant du siège considéré à l'intérieur de la console centrale 30.

La position relative d'un bloc et des sièges par rapport à la console centrale 30 et les dimensions suivant la direction longitudinale de l'ensemble 100 sont tels que l'espace résultant dédié à un siège occupe suivant une longueur **Lc** sensiblement une distance depuis une face arrière de la coque du siège considéré et une face de ladite console centrale d'un côté opposé de ladite console centrale par rapport à un côté duquel est situé ledit siège considéré. Autrement dit, si l'on considère que la console centrale 30 comporte une face avant située vers l'avant suivant la position de l'ensemble 100 orienté par la flèche sur les dessins et une face arrière située vers l'arrière, alors suivant l'agencement décrit supra, en position couchage un siège avant 20a, 21a s'étend vers l'arrière sensiblement jusqu'à la face arrière de la console centrale et un siège arrière 20b, 21b s'étend vers l'avant sensiblement jusqu'à la face avant de la console centrale.

Avantageusement la longueur **Lc** correspond, en prenant en considération les épaisseurs de parois de la coque du siège et de la console centrale, à la longueur nécessaire pour obtenir une longueur voulue d'un couchage.

Comme il ressort de la figure 4, deux premiers sièges avant 21a et arrière 21b, agencés suivant la première diagonale 105 de l'ensemble 100, partagent en vue de dessus, un même emplacement de la console centrale 30 pour placer les pieds des occupants des dits deux premiers sièges.

Pour permettre cette configuration sans gêne pour les occupants des premiers sièges avant 21a et arrière 21b, le plan de couchage de l'un des dits deux premiers sièges est décalé en hauteur par rapport au plan de couchage de l'autre premier siège, et la console centrale 30 comporte des cloisons déterminant des logements de pieds dans lesquels les passagers des dits sièges peuvent placer leurs pieds sans se gêner l'un l'autre lorsqu'ils sont étendus.

Les logements de pieds associés aux premiers sièges 21a, 21b sont donc superposés en hauteur.

Ainsi dans l'exemple illustré sur la figure 4, le premier siège avant 21a du bloc 10a est, en position couchage, dans une position basse (repérée par la lettre **B** portée sur le dessin dudit siège) et le premier siège arrière 21b du bloc 10b est, en position couchage, dans une position haute (repérée par la lettre **H** portée sur le dessin dudit siège). Ce choix peut cependant être inversé et il sera le cas échéant pris en considérations des conditions d'accès aux sièges qui sont fonction de la manière dont l'ensemble 100 est installé dans une cabine.

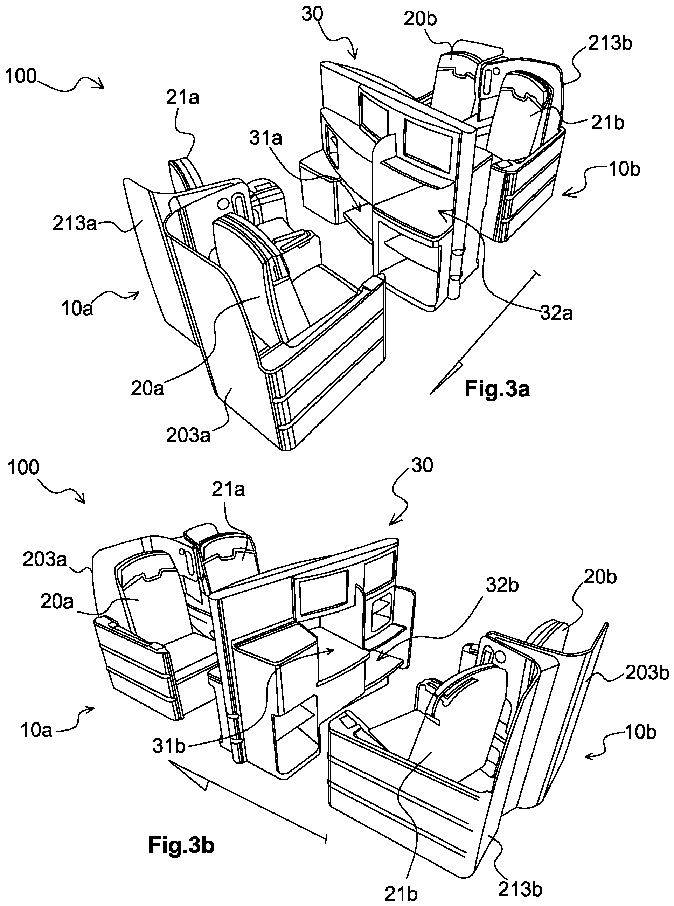

Ces caractéristiques seront mieux comprises en considérant les vues en perspective d'un ensemble 100 sur les figures 3a et 3b.

Sur ces figures, les sièges sont montrés en position fauteuil de sorte à laisser apparentes les caractéristiques de la console centrale 30.

La console centrale 30 constitue une cloison épaisse entre la face avant et la face arrière de ladite console centrale.

Les faces avant et arrière ne sont pas régulières, en particulier ne sont pas planes, comme l'illustre les figures 3a et 3b, en raison de fonctions et équipements qui sont incorporés à ladite console centrale, sans que cet caractéristique ne soit limitative.

Du fait de la position rapprochée des deux blocs 10a, 10b de sièges d'un ensemble 100, position rapprochée qui conduit à une distance entre l'arrière des sièges de blocs différents inférieure à deux fois la longueur, sensiblement **Lc**, d'un couchage, la console centrale 30 comporte suivant l'axe longitudinal de chaque siège de l'ensemble 100 un logement de pieds 31a, 32a, 31b, 32b correspondant à un volume creux dans ladite console centrale ouvert au moins sur une face dudit volume creux faisant face au siège en vis à vis auquel ledit volume creux est associé.

En outre chaque logement de pieds comporte une surface repose pieds formée par une paroi inférieure, sensiblement horizontale, du volume creux formant le logement de pieds considéré, ladite paroi inférieure étant sensiblement à une hauteur correspondant à la hauteur du plan de couchage du siège en vis à vis auquel est rattaché le logement de pied, de sorte à former avec le dossier et l'assise du siège, et le cas échéant avec un repose jambes du siège, une surface continue sensiblement horizontale formant un couchage.

Les logements de pieds 31a, 31b associés aux premiers sièges 21a, 21b, dont les emplacements des pieds se recouvrent en vue de dessus, sont, dans la console centrale 30, superposés du fait que les plans de couchage des sièges en question ne sont pas placés à la même hauteur.

Les logements de pieds 32a, 32b des deux seconds sièges 20a, 20b sont, dans la console centrale 30, situés proches d'extrémités latérales, en vue de dessus de part et d'autre des deux logements de pieds superposés.

Du fait de la convergence des axes des sièges d'un bloc depuis les dossiers des sièges vers un point situé en deçà des zones pieds, il est obtenu que la largeur de la console centrale 30 est principalement liée à celle d'une largeur cumulée de trois logements de pieds et que cette largeur correspond sensiblement à la largeur d'un bloc de deux sièges.

Il est ainsi possible de réaliser des couchages dont la largeur, déterminée au niveau du dossier pour assurer le confort d'un occupant au niveau des épaules, est sensiblement constante sur sensiblement toute la longueur du plan de couchage, y compris dans la zone des pieds. Il en résulte un confort amélioré du fait que l'occupant est en mesure de se retourner sur le couchage et de bouger ses jambes avec un minimum de gêne comme le montre le mannequin illustré sur la figure 4.

Comme le montre les figures 3a et 3b, le plan de couchage du second siège 20a, 20b d'un bloc est décalé en hauteur par rapport au plan de couchage du premier siège 21a, 21b du même bloc.

Ainsi lorsque le premier siège a un plan de couchage décalé vers le bas, repère **B,** le second siège qui lui est voisin à un plan de couchage décalé vers le haut, repère **H,** et inversement.

Un avantage de cette configuration tient à ce que les deux sièges ayant un plan de couchage bas sont d'un même bord latéral 101 de l'ensemble 100 et que les deux sièges ayant un plan de couchage haut sont du même bord latéral opposé. Cette configuration, lorsqu'il est pris soin d'agencer l'ensemble avec une allée de circulation 201 du côté des sièges dont le couchage est décalé vers le bas permet un accès plus aisé aux sièges opposés à l'allée de circulation.

Il doit cependant être remarqué que, sous réserve de gérer des interférences des logements de pieds, interférences minimisées par les orientations relatives des axes longitudinaux des sièges, le décalage en hauteur des plans de couchage des premier et second sièges d'un même bloc ne sont pas strictement nécessaire et que l'ensemble 100 dans un mode de réalisation comporte deux sièges d'un bloc avec une même hauteur de couchage, **B** par exemple, et comporte deux sièges de l'autre bloc ayant ou non une même hauteur de couchage mais dont la hauteur de couchage au moins du premier siège est différente de celle des sièges du bloc en vis à vis, **H** dans l'exemple.

Outre sa fonction primaire dans l'invention de maintenir des surfaces repose-pieds associées aux sièges, la console centrale réalise :
- un cloisonnement de l'espace entre les deux blocs de sièges 10a, 10b jusqu'à une hauteur souhaitée, avantageusement une hauteur telle qu'en position assise les occupants des sièges en vis à vis ne se voient pas ;
- un cloisonnement vertical des logements de pieds ;
- des espaces de rangement affectés à chaque siège ;
- le support d'écrans individuels ou autres moyens de distraction affectés à chaque siège...

De l'agencement des sièges dans un ensemble 100, il doit être noté que les premiers sièges 21a, 21b; proches d'un alignement suivant la première diagonale 105 du rectangle exinscrit 101, bénéficient au sein dudit rectangle exinscrit d'une longueur totale disponible supérieure à la longueur **Lx** d'un bord latéral dudit rectangle exinscrit. La longueur **Lx** d'un bord latéral est en pratique déterminée par les deux seconds sièges 20a, 20b dont les axes longitudinaux sont beaucoup moins inclinés par rapport à l'axe longitudinal X de l'ensemble 100 et par la nécessité de maintenir entre la console centrale 30 et les sièges en position fauteuil une distance nécessaire d'une largeur minimum pour des raisons de confort et d'accès.

Ainsi, comme il est visible sur les figures 2 et 4, une face arrière de la coque 213a, 213b d'un des premiers sièges 21a, 21b n'a pas besoin de se trouver contre le bord avant 103 ou le bord arrière 104, suivant le siège considéré, du rectangle exinscrit 101, comme le sont les faces arrières des coques 203a, 203b des second sièges 20a, 20b qui déterminent en pratique la position des dits bords avant et arrière.

Il résulte de cette configuration qu'un fond avant ou arrière de l'ensemble 100 ne suit pas strictement le bord avant 103 ou arrière 104 du rectangle exinscrit 101 mais forme une courbe en S dans laquelle les faces arrière de deux coques d'un même bloc sont décalées suivant la direction longitudinale X, une face arrière d'une coque d'un premier siège 21a, 21b étant décalé vers l'intérieur du rectangle exinscrit 100 d'une distance **DLx.**

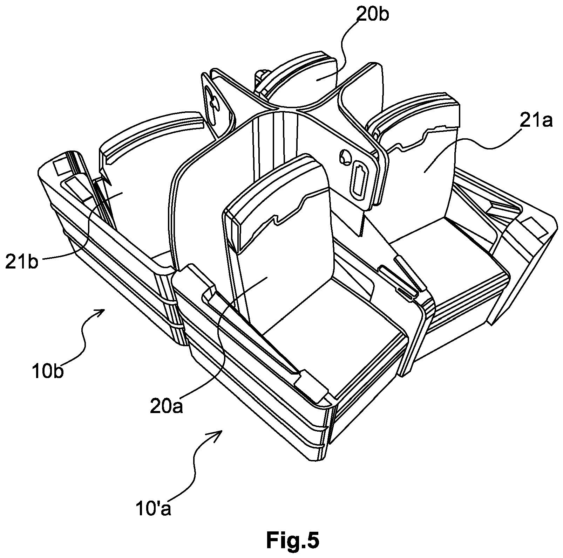

En outre, comme il est illustré sur la figure 5, du fait d'une symétrie radiale de la forme en plan obtenue de l'ensemble 100, deux ou plus ensembles 100 similaires peuvent être juxtaposés suivant la direction longitudinale X de manière jointive pour former une ligne 200.

De cette configuration il résulte également la possibilité de réaliser des agencements de deux blocs 10b, 10'a de sièges dos à dos, les dits deux blocs étant destinés à deux ensembles 100, 100' différents se succédant, par exemple dans le but d'optimiser les servitudes utiles au fonctionnement des sièges et les raccordements à des sources d'alimentation en énergie ou à des canaux de communication avec le véhicule dans une cabine duquel sont installés les sièges.

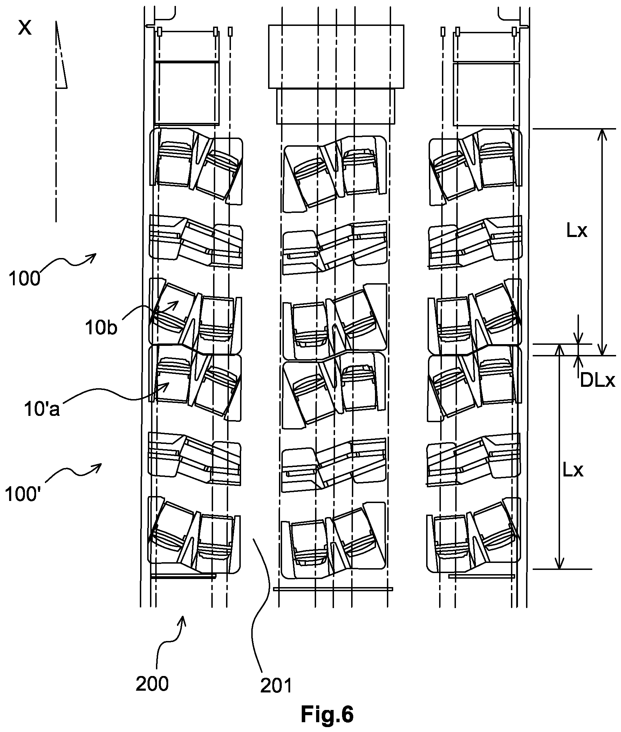

En outre, il est obtenu, comme illustré sur la figure 6 d'un agencement d'une cabine d'un avion, pour chaque ensemble 100, 100' juxtaposé dans un arrangement de deux ou plusieurs ensembles jointifs, un gain de valeur **DLx** sur la longueur **Lx.**

Par exemple pour trois ensembles juxtaposés, la longueur totale résultante suivant la direction longitudinale X n'est que de 3 * **Lx** - 2 * **DLx**.

Ce gain sur la longueur de cabine nécessaire se cumule ici avec le gain résultant du recouvrement des zones pieds des sièges.

Dans l'exemple de réalisation, les deux blocs 10a, 10b de deux sièges d'un ensemble 100 et la console centrale 30 du même ensemble sont maintenu dans leurs positions relatives souhaitées en étant fixés à un plancher du véhicule.

Les fixations sont par exemple des fixations à des emplacements déterminés ou sont, comme le plus souvent dans les aéronefs, choisies sur des rails intégrés au plancher.

L'invention permet donc de réaliser des sièges de grand confort en configuration de couchage à plat avec une longueur de cabine nécessaire par siège sensiblement inférieur à la longueur du couchage et inférieure aux solutions connues.

L'intimité de chaque occupant d'un siège se trouve préservée tant vis à vis d'un siège voisin latéralement que face à face.

L'invention permet également de dissocier la partie siège proprement dite de la partie console centrale et donc de dissocier les éléments relatif à la mécanique du siège et à la gestion de sa conversion entre les différentes configuration, fauteuil et couchage ou autres positions intermédiaires, de ceux relatifs aux distractions du passager.

De ce fait, moyennant des modifications mineures, par exemple la longueur d'un repose jambe, il est également possible, avec des blocs et des consoles centrales données, d'agencer des ensembles avec des longueurs de couchage différentes.

L'invention permet d'aménager des cabines pour passagers, en particulier des cabines d'avion, avec un nombre de sièges supérieurs à celui d'un aménagement avec les sièges connus pour une longueur des couchages donnée et une cabine donnée, ou de diminuer la longueur d'une cabine pour un nombre de sièges donnés et une longueur des couchages donnée.

## Revendications

1. Ensemble (100) de deux blocs (10a, 10b) de deux sièges, avec pour chaque bloc un premier siège (21a, 21b) et un second siège (20a, 20b), dans lequel chaque siège est convertible individuellement, par un mouvement relatif d'au moins une assise et un dossier du siège, entre une configuration fauteuil et une configuration couchage, dans laquelle l'assise et le dossier du siège sont placés sensiblement dans un plan horizontal pour former une partie d'un plan de couchage, dans lequel ensemble les dits deux blocs sont agencés avec les sièges d'un bloc avant (10a) face à face avec les sièges d'un bloc arrière (10b) dans un rectangle exinscrit (101) dudit ensemble délimité par des bords latéraux (102), de longueur **Lx,** orientés suivant une direction longitudinale X de l'ensemble (100), par un bord avant (103) et par un bord arrière (104), de longueur **Ly**, orientés suivant une direction transversale de l'ensemble (100) perpendiculaire à la direction longitudinale X, dans lequel les premiers sièges (21a, 21b) des deux blocs (10a, 10b) sont agencés dans l'ensemble (100) suivant une première diagonale (105) du rectangle exinscrit (101), des axes longitudinaux (211a, 211b) des dits premiers sièges étant rapprochés en direction d'une direction de la dite première diagonale, les dits premiers sièges étant placés sensiblement en vis à vis, **caractérisé en ce que** une distance entre les deux premiers sièges (21a, 21b) est telle qu'une zone pieds (212a) d'un premier siège (21a) d'un bloc (10a), sur laquelle zone pieds se trouvent les pieds d'un occupant du premier siège considéré en position couchage, se superpose en vue de dessus avec une zone pieds (212b) du premier siège (21b) de l'autre bloc (10b) et dans lequel, lorsque les deux premiers sièges (21a, 21b) sont en configuration couchage, le plan de couchage des dits deux premiers sièges sont situés à des hauteurs différentes par rapport à un niveau de référence.

2. Ensemble suivant la revendication 1 dans lequel la longueur **Ly** des bords avant (103) et arrière (104), correspondant à une largeur du rectangle exinscrit (101), est déterminée par l'assemblage côte à côte des deux sièges d'un bloc, largeurs cumulées des assises et des accoudoirs des deux sièges, et dans lequel les seconds sièges (20a, 20b) des blocs avant et arrière sont agencés dans ledit ensemble suivant une seconde diagonale et avec un axe longitudinal (201a, 201b) de chacun des dits seconds sièges orienté de sorte qu'une zone pieds (202a, 202b) de chacun des dits seconds sièges sont situés dans le rectangle exinscrit (102).

3. Ensemble suivant la revendication 2 dans lequel les zones pieds (202a, 202b, 212a, 212b) correspondent à des logements de pieds (32a, 32b, 31a, 31b) agencés dans une console centrale (30) entre les deux blocs (10a, 10b), les logements de pieds (31a, 31b) des premiers sièges (21a, 21b) étant superposés et dans lequel les logements de pieds (32a, 32b) des seconds sièges (20a, 20b) sont juxtaposés de part et d'autre des logements de pieds (31a, 31b) des premiers sièges.

4. Ensemble suivant l'une des revendications précédentes dans lequel chaque siège (20a, 20b, 21a, 21b) est habillé d'une coque (203a, 203b, 213a, 213b), une face arrière de la coque (203a) du second siège (20a) du bloc avant (10a) est sensiblement contre le bord avant (103) du rectangle exinscrit (101), une face arrière de la coque (203b) du second siège (20b) du bloc arrière (10b) est sensiblement contre le bord arrière (104) dudit rectangle exinscrit, une face arrière de la coque (213a, 213b) de chacun des premiers sièges (21a, 21b) étant décalée d'une distance **DLx** vers l'intérieur du rectangle exinscrit (102) par rapport aux bords avant ou arrière dudit rectangle exinscrit.

5. Ensemble suivant l'une des revendications précédentes, en combinaison avec la revendication 3 dans lequel la console centrale (30) forme une séparation visuelle entre les deux blocs (10a, 10b) intégrant des éléments individuels de confort ou d'amusement à l'attention de chacun des occupants des sièges.

6. Ensemble suivant l'une des revendications précédentes dans lequel le plan de couchage de l'un au moins des seconds sièges (20a, 20b) est décalé en hauteur par rapport au plan de couchage du premier siège (21a, 21b) qui lui est voisin dans le bloc (10a, 10b) comprenant ledit au moins un des seconds sièges.

7. Ensemble suivant la revendication 6 dans lequel le plan de couchage de chacun des deux seconds sièges (20a, 20b) est décalé en hauteur par rapport au plan de couchage du premier siège (21a, 21b) qui lui est voisin dans le même bloc, de sorte que les plans de couchage de deux sièges situés du côté d'un même bord latéral (102) du rectangle exinscrit (101) se trouvent décalés en hauteur dans un même sens, vers le haut ou vers le bas, par rapport aux plans de couchage des deux sièges situés du côté de l'autre bord latéral dudit rectangle exinscrit.

8. Cabine ou partie de cabine de véhicule pour le transport de passagers comportant au moins une ligne (200) d'au moins deux ensembles (100, 100') conformes à l'une des revendication précédentes juxtaposés suivant l'axe longitudinal X, dans laquelle ligne une face arrière d'un bloc arrière (10b) d'un premier ensemble (100) est contre une face arrière d'un bloc avant (10'a) d'un second ensemble (100') juxtaposé audit premier ensemble à l'arrière dudit premier ensemble.

9. Cabine ou partie de cabine suivant la revendication 8 prise en combinaison avec la revendication 4, dans laquelle des rectangles exinscrits des au moins deux ensembles (100, 100') juxtaposés se recouvrent partiellement de la longueur **DLx** de sorte que **N** (N supérieur ou égale à deux) ensembles de longueur **Lx** juxtaposés occupent suivant la direction longitudinale X une longueur totale de **N** fois **Lx** diminuée de **N-1** fois **DLx.**

10. Cabine ou partie de cabine suivant la revendication 8 ou la revendication 9 prise en combinaison avec la revendication 7 dans laquelle les deux sièges situés du côté d'un même bord latéral (102) du rectangle exinscrit (101) et décalés vers le bas par rapport aux deux sièges situés du côté de l'autre bord latéral dudit rectangle exinscrit sont bordés par une allée de circulation (201) de ladite cabine ou partie de cabine.

11. Cabine ou partie de cabine suivant l'une des revendications 8 à 10 dans laquelle un ensemble (100) comporte un bloc avant (10a) de deux sièges, un bloc arrière (10b) de deux sièges et une console centrale (30), les dits bloc avant, bloc arrière et console centrale étant fixés à des distances de séparation voulues indépendamment les uns des autres à un plancher de ladite cabine ou partie de cabine par des points de fixation agencé dans ledit plancher.

12. Cabine ou partie de cabine suivant l'une des revendications 8 à 11 dans laquelle un bloc arrière (10b) d'un premier ensemble (100) placé dos à dos contre un bloc avant (10'a) d'un second ensemble (100') juxtaposé audit premier ensemble à l'arrière dudit premier ensemble partage des servitudes utiles au fonctionnement des sièges des dits blocs.

13. Aéronef comportant une cabine ou une partie de cabine conforme à l'une des revendications 8 à 12.

## Patentansprüche

1. Anordnung (100) aus zwei Blöcken (10a, 10b) von zwei Sitzen mit für jeden Block einem ersten Sitz (21a, 21b) und einem zweiten Sitz (20a, 20b), wobei jeder Sitz durch eine relative Bewegung von mindestens einer Sitzfläche und einer Rückenlehne des Sitzes zwischen einer Sitzkonfiguration und einer Schlafkonfiguration einzeln konvertibel ist, wobei die Sitzfläche und die Rückenlehne des Sitzes im Wesentlichen in einer horizontalen Ebene angeordnet sind, um einen Teil einer Schlaffläche zu bilden, wobei in der Anordnung die zwei Blöcke mit den Sitzen eines vorderen Blockes (10a) gegenüber von den Sitzen eines hinteren Blockes (10b) in einem umschriebenen Rechteck (101) der Anordnung angeordnet sind, das von Seitenkanten (102) von der Länge Lx, die in einer Längsrichtung X der Anordnung (100) ausgerichtet sind, von einer Vorderkante (103) und von einer Hinterkante (104) der Länge Ly, die in einer Querrichtung der Anordnung (100), die senkrecht zur Längsrichtung X ist, ausgerichtet sind, begrenzt ist, wobei die ersten Sitze (21a, 21b) der zwei Blöcke (10a, 10b) in der Anordnung (100) entlang einer ersten Diagonale (105) des umschriebenen Rechtecks (101) angeordnet sind, wobei Längsachsen (211a, 211b) von den ersten Sitzen in Richtung einer Richtung der ersten Diagonale einander angenähert sind, wobei die ersten Sitze im Wesentlichen einander gegenüberliegend angeordnet sind, **dadurch gekennzeichnet, dass** ein Abstand zwischen den zwei ersten Sitzen (21a, 21b) derart ist, dass sich ein Fußbereich (212a) eines ersten Sitzes (21a) eines Blockes (10a), in dem sich die Füße eines Benutzers des ersten betreffenden Sitzes in Schlafposition befinden, in Draufsicht mit einem Fußbereich (212b) des ersten Sitzes (21b) des anderen Blockes (10b) überlagert, und wobei sich, wenn die zwei ersten Sitze (21a, 21b) in Schlafkonfiguration sind, die Schlafflächen der zwei ersten Sitze auf Höhen befinden, die gegenüber von einem Referenzniveau verschieden sind.

2. Anordnung nach Anspruch 1, wobei die Länge Ly der Vorder- (103) und Hinterkante (104), die einer Länge des umschriebenen Rechtecks (101) entspricht, durch das nebeneinander Zusammensetzen der zwei Sitze eines Blocks, kumulative Breiten der Sitzflächen und Armlehnen der zwei Sitze, bestimmt ist, und wobei die zweiten Sitze (20a, 20b) des vorderen und hinteren Blocks in der Anordnung entlang einer zweiten Diagonale und mit einer Längsachse (201a, 201b) von jedem der zweiten Sitze angeordnet sind, die derart ausgerichtet ist, dass ein Fußbereich (202a, 202b) von jedem der zweiten Sitze in dem umschriebenen Rechteck (102) angeordnet ist.

3. Anordnung nach Anspruch 2, wobei die Fußbereiche (202a, 202b, 212a, 212b) Fußaufnahmen (32a, 32b, 31a, 31b) entsprechen, die in einer Mittelkonsole (30) zwischen den zwei Blöcken (10a, 10b) angeordnet sind, wobei die Fußaufnahmen (31a, 31b) der ersten Sitze (21a, 21b) überlagert sind und wobei die Fußaufnahmen (32a, 32b) der zweiten Sitze (20a, 20b) auf beiden Seiten der Fußaufnahmen (31a, 31b) der ersten Sitze nebeneinander angeordnet sind.

4. Anordnung nach einem der vorhergehenden Ansprüche, wobei jeder Sitz (20a, 20b, 21a, 21b) mit einer Schale (203a, 203b, 213a, 213b) verkleidet ist, eine Rückseite der Schale (203a) des zweiten Sitzes (20a) des vorderen Blockes (10a) im Wesentlichen gegen die Vorderkante (103) des umschriebenen Rechtecks (101) ist, eine Rückseite der Schale (203b) des zweiten Sitzes (20b) des hinteren Blockes (10b) im Wesentlichen gegen die Hinterkante (104) des umschriebenen Rechtecks ist, wobei eine Rückseite der Schale (213a, 213b) von jedem der ersten Sitze (21a, 21b) um einen Abstand DLx in Richtung der Innenseite des umschriebenen Rechtecks (102) in Bezug auf die Vorder- und Hinterkante des umschriebenen Rechtecks versetzt ist.

5. Anordnung nach einem der vorhergehenden Ansprüche in Kombination mit Anspruch 3, wobei die Mittelkonsole (30) eine visuelle Trennung zwischen den zwei Blöcken (10a, 10b) bildet, in der einzelne Komfort- oder Unterhaltungselemente für jeden der Benutzer der Sitze integriert sind.

6. Anordnung nach einem der vorhergehenden Ansprüche, wobei die Schlaffläche von mindestens einem der zweiten Sitze (20a, 20b) gegenüber der Schlaffläche des ersten Sitzes (21a, 21b), der seinerseits in dem Block (10a, 10b), der den mindestens einen der zweiten Sitze aufweist, nächstgelegen ist, in der Höhe versetzt ist.

7. Anordnung nach Anspruch 6, wobei die Schlaffläche von jedem der zwei zweiten Sitze (20a, 20b) gegenüber der Schlaffläche des ersten Sitzes (21a, 21b), der ihm in dem gleichen Block nächstgelegen ist, derart in der Höhe versetzt list, dass die Schlafflächen von zwei Sitzen, die neben einer gleichen Seitenkante (102) des umschriebenen Rechtecks (101) angeordnet sind, in einer gleichen Richtung nach oben oder nach unten gegenüber den Schlafflächen der zwei Sitze in der Höhe versetzt sind, die neben der anderen Seitenkante des umschriebenen Rechtecks angeordnet sind.

8. Kabine oder Teil einer Kabine eines Fahrzeugs für den Transport von Passagieren, umfassend mindestens eine Reihe (200) von mindestens zwei Anordnungen (100, 100') gemäß einem der vorhergehenden Ansprüche, die entlang der Längsachse X nebeneinander angeordnet sind, wobei in der Reihe eine Rückseite eines hinteren Blockes (10b) einer ersten Anordnung (100) gegen eine Rückseite eines vorderen Blocks (10'a) einer zweiten Anordnung (100') ist, die angrenzend an die erste Anordnung an der Rückseite der ersten Anordnung angeordnet ist.

9. Kabine oder Teil einer Kabine nach Anspruch 8 in Kombination mit Anspruch 4, wobei sich umschriebene Rechtecke der mindestens zwei nebeneinanderliegenden Anordnungen (100, 100') teilweise um die Länge DLx derart überlappen, dass N (N größer oder gleich zwei) nebeneinanderliegende Anordnungen der Länge Lx entlang der Längsrichtung X eine Gesamtlänge von N mal Lx, die um N-1 mal DLx verringert ist, einnehmen.

10. Kabine oder Teil einer Kabine nach Anspruch 8 oder 9 in Kombination mit Anspruch 7, wobei die zwei Sitze, die neben einer gleichen Seitenkante (102) des umschriebenen Rechtecks (101) angeordnet sind und nach unten gegenüber den zwei Sitzen versetzt sind, die neben der anderen Seitenkante des umschriebenen Rechtecks angeordnet sind, von einem Gang (201) der Kabine oder des Teils der Kabine gesäumt sind.

11. Kabine oder Teil einer Kabine nach Anspruch 8 bis 10, wobei eine Anordnung (100) einen vorderen Block (10a) von zwei Sitzen, einen hinteren Block (10b) von zwei Sitzen und eine Mittelkonsole (30) aufweist, wobei der vordere Block, der hintere Block und die Mittelkonsole in gewünschten Trennungsabständen unabhängig voneinander an einem Boden der Kabine oder des Teils der Kabine durch Befestigungspunkte, die in dem Boden angeordnet sind, befestigt sind.

12. Kabine oder Teil einer Kabine nach einem der Ansprüche 8 bis 11, wobei ein hinterer Block (10b) einer ersten Anordnung (100), die Rücken an Rücken gegen einen vorderen Block (10'a) einer zweiten Anordnung (100') angeordnet ist, die angrenzend an die erste Anordnung an der Rückseite der ersten Anordnung angeordnet ist, Stromverteiler, die für den Betrieb der Sitze der Blöcke nützlich sind, teilt.

13. Luftfahrzeug, umfassend eine Kabine oder einen Teil einer Kabine nach einem der Ansprüche 8 bis 12.

## Claims

1. Set (100) of two blocks (10a, 10b) each of two seats, with for each block a first seat (21a, 21b) and a second seat (20a, 20b), wherein each seat is convertible individually, by relative movement of at least a seat cushion and a seat back of the seat, between a sitting configuration and a recumbent configuration, wherein the seat cushion and the seat back of the seat are placed substantially in a horizontal plane to form part of a plane to lie down on, wherein together said two blocks are arranged with the seats of a front block (10a) face-to-face with the seats of a rear block (10b) inside a circumscribed rectangle (101) of said set delimited by lateral edges (102), of length Lx, oriented in a longitudinal direction X of the set (100), by a front edge (103) and by a rear edge (104), of length Ly, oriented in a transverse direction of the set (100) perpendicular to the longitudinal direction X, wherein the first seats (21a, 21b) of the two blocks (10a, 10b) are arranged in the set (100) along a first diagonal (105) of the circumscribed rectangle (101), longitudinal axis (211a, 211b) of said first seats being close in terms of direction to a direction of said first diagonal, and said first seats are placed substantially face-to-face, **characterized in that** a distance between the two first seats (21a, 21b) is such that a foot area (212a) of a first seat (21a) of a block (10a) on which are placed the feet of an occupant of the first seat in question in the recumbent position is superposed when seen from above with a foot area (212b) of the first seat (21b) of the other block (10b) and wherein, when the two first seats (21a, 21b) are in the recumbent configuration, the planes to lie down on of said two first seats are at different heights relative to a reference level.

2. Set according to Claim 1 wherein the length Ly of the front edge (103) and the rear edge (104) corresponding to the width of the circumscribed rectangle (101) is determined by the side-by-side assembly of the two seats of a block, cumulative widths of the seat cushions and armrests of the two seats, and wherein the second seats (20a, 20b) of the front and rear blocks are arranged in said set along a second diagonal and with a longitudinal axis (201a, 201b) of each of said second seats oriented so that a foot area (202a, 202b) of each of said second seats is located inside the circumscribed rectangle (102).

3. Set according to Claim 2 wherein the foot areas (202a, 202b, 212a, 212b) correspond to footwells (32a, 32b, 31a, 31b) arranged in a central console (30) between the two blocks (10a, 10b), the footwells (31a, 31b) of the first seats (21a, 21b) being superposed, and wherein the footwells (32a, 32b) of the second seats (20a, 20b) are juxtaposed on either side of the footwells (31a, 31b) of the first seats.

4. Set according to any one of the preceding claims wherein each seat (20a, 20b, 21a, 21b) is enclosed in a shell (203a, 203b, 213a, 213b), a rear face of the shell (203a) of the second seat (20a) of the front block (10a) is substantially against the front edge (103) of the circumscribed rectangle (101), a rear face of the shell (203b) of the second seat (20b) of the rear block (10b) is substantially against the rear edge (104) of said circumscribed rectangle, a rear face of the shell (213a, 213b) of each of the first seats (21a, 21b) being offset a distance DLx toward the interior of the circumscribed rectangle (102) relative to the front or rear edges of said circumscribed rectangle.

5. Set according to any one of the preceding claims, in combination with Claim 3, wherein the central console (30) forms a visual separation between the two blocks (10a, 10b) incorporating individual comfort or entertainment features for the attention of each of the occupants of the seats.

6. Set according to any one of the preceding claims wherein the plane to lie down on of at least one of the second seats (20a, 20b) is offset in height relative to the plane to lie down on of the first seat (21a, 21b) next to it in the block (10a, 10b) including said at least one of the second seats.

7. Set according to Claim 6 wherein the plane to lie down on of each of the two second seats (20a, 20b) is offset in height relative to the plane to lie down on of the first seat (21a, 21b) next to it in the same block so that the planes to lie down on of two seats located beside the same lateral edge (102) of the circumscribed rectangle (101) are offset in height in the same upward or downward direction relative to the planes to lie down on of the two seats located beside the other lateral edge of said circumscribed rectangle.

8. Passenger vehicle cabin or cabin portion including at least one line (200) of at least two sets (100, 100') according to any one of the preceding claims juxtaposed along the longitudinal axis X, in which line a rear face of a rear block (10b) of a first set (100) is against a rear face of a front block (10'a) of a second set (100') juxtaposed to said first set behind said first set.

9. Cabin or cabin portion according to Claim 8 in combination with Claim 4, wherein circumscribed rectangles of the at least two juxtaposed sets (100, 100') overlap partially by the length DLx so that N (N ≥ 2) juxtaposed sets of length Lx occupy along the longitudinal direction X a total length N times Lx minus N-1 times DLx.

10. Cabin or cabin portion according to Claim 8 or Claim 9 in combination with Claim 7 wherein the two seats located beside the same lateral edge (102) of the circumscribed rectangle (101) and offset downward relative to the two seats located beside the other lateral edge of said circumscribed rectangle are flanked by a circulation aisle (201) of said cabin or cabin portion.

11. Cabin or cabin portion according to any one of Claims 8 to 10 wherein a set (100) includes a front block (10a) of two seats, a rear block (10b) of two seats and a central console (30), said front block, said rear block and said central console being fixed at required separation distances independently of each other to a floor of said cabin or cabin portion by fixing points arranged in said floor.

12. Cabin or cabin portion according to any one of Claims 8 to 11 wherein a rear block (10b) of a first set (100) placed back-to-back against a front block (10'a) of a second set (100') juxtaposed to said first set behind said first set shares ancillaries useful to the functioning of the seats of said blocks.

13. Aircraft including a cabin or cabin portion conforming to any one of Claims 8 to 12.
